# FASCICULE DE BREVET EUROPEEN

(11) **EP 1 593 567 B1**
(45) Date de publication et mention de la délivrance du brevet: **12.01.2011**
(21) Numéro de dépôt: 04291183.4
(22) Date de dépôt: 07.05.2004
(51) Int. Cl.: B60T 7/12, B60T 13/74

(54) **Fonction d'assistance à la conduite lors du suivi d'une file de véhicules**
Funktion zur Fahrunterstützung während des Verfolgens einer Reihe von Fahrzeugen
Driving aid function when following a line of vehicles

(43) Date de publication de la demande: 09.11.2005
(73) Titulaire: Delphi Technologies, Inc., Troy, MI 48007 (US); Peugeot Citroën Automobiles SA, 78140 Vélizy-Villacoublay (FR)
(72) Inventeur: Alavarez, Belen, 75015 Paris (FR); Groult, Xavier, 95470 Survilliers (FR); Vantalon, Frédéric, 92270 Bois Colombes (FR)
(74) Mandataire: Laget, Jean-Loup

(56) Documents cités:
- EP-A- 1 083 075
- US-A- 4 629 043
- US-A1- 2003 227 215
- US-B1- 6 679 810

## Description

L'invention est relative à un procédé d'assistance à la conduite. Plus particulièrement, l'invention est relative à un procédé d'assistance à la conduite lorsque le véhicule considéré se trouve pris au milieu d'une circulation encombrée et lente, lorsque le conducteur est contraint de suivre une file de véhicules. C'est typiquement le cas lorsque le véhicule se trouve dans un bouchon.

Dans cette situation, il peut être fastidieux pour le conducteur d'appuyer de manière répétitive sur la pédale de frein pour réduire la vitesse du véhicule lorsque la distance avec le véhicule précédent se réduit, puis d'appuyer sur la pédale d'accélérateur pour relancer le véhicule lorsque la distance avec le véhicule précédent augmente. En plus de ces opérations répétitives de freinage et d'accélération, le conducteur doit gérer l'embrayage, à l'aide d'une pédale d'embrayage, lorsque le véhicule possède une boîte de vitesses manuelle : il s'agit de découpler le moteur des roues en freinant et de coupler le moteur aux roues en accélérant.

le document US 2003/0227215 A montre un procédé d'après le préambule de la revendication 1. L'invention a donc pour but de résoudre les inconvénients liés à la conduite dans une situation de suivi de file.

L'invention a pour objet un procédé d'assistance au freinage d'un véhicule, conforme à la revendication 1.

De préférence, une condition d'entrée élémentaire est une condition de vitesse maximale du véhicule, condition d'entrée qui est vérifiée lorsque la valeur instantanée de la vitesse du véhicule est inférieure à une valeur seuil.

De préférence, une condition d'entrée élémentaire est une condition de vitesse minimale du véhicule, condition d'entrée qui est vérifiée lorsque la valeur instantanée de la vitesse du véhicule est supérieure à une vitesse nulle.

De préférence, une condition d'entrée élémentaire est une condition de position de pédale d'embrayage, condition d'entrée qui est vérifée lorsque la valeur émise par un capteur apte à détecter la position d'une pédale d'embrayage correspond à une position complètement enfoncée de ladite pédale d'embrayage.

De préférence, une condition d'entrée élémentaire est une condition de position de pédale d'accélérateur, condition d'entrée qui est vérifiée lorsque la valeur émise par un capteur apte à détecter la position d'une pédale d'accélérateur, correspond à une position complètement relâchée de ladite pédale d'accélérateur.

De préférence, une condition de sortie élémentaire est une condition de vitesse du véhicule, condition de sortie qui est vérifiée lorsque la valeur instantanée de la vitesse dudit véhicule est nulle.

De préférence, une condition de sortie élémentaire est une condition de force de freinage, condition de sortie qui est vérifiée lorsque la valeur de la force de freinage demandée par le conducteur est supérieure à la valeur de la force de freinage générée à l'étape de génération.

De préférence, une condition de sortie élémentaire est une condition de position de pédale d'accélérateur, condition de sortie qui est vérifiée lorsque la valeur émise par un capteur apte à détecter la position d'une pédale d'accélérateur, correspond à une position enfoncée de ladite pédale d'accélérateur.

Dans un mode de réalisation préféré, le procédé comporte une étape consistant à mesurer la durée depuis l'événement logique d'entrée et la force de freinage générée a une valeur nulle tant que la durée est inférieure à une durée inférieure seuil prédéfinie.

De préférence, le procédé comporte une étape consistant à mesurer la durée depuis l'événement logique d'entrée, et la force de freinage générée a une valeur qui est une fonction croissante de ladite durée.

L'invention a également pour objet un logiciel d'assistance à la conduite, et plus particulièrement au suivi de file, contenant des instructions propres à être lues et stockées sur un support, les instructions étant exécutables par un ordinateur hôte, **caractérisé en ce que** le logiciel met en oeuvre l'un des procédés ci-dessus.

L'invention a également pour but un contrôleur de freinage programmable, comportant un espace mémoire apte à stocker des instructions d'un programme, un calculateur apte à exécuter lesdites instructions et une interface d'entrée/sortie connectable en entrée à au moins un capteur apte à détecter la position d'une pédale d'embrayage dont est équipé ledit véhicule, et en sortie à au moins une unité d'actionnement d'étrier de frein dudit système de freinage, **caractérisé en ce que** le contrôleur est programmé pour comporter :
- un moyen de détermination d'un état instantané dudit véhicule, état défini par au moins une variable d'état obtenue à partir de mesures effectuées au moyen dudit au moins un capteur ;
- un moyen de test d'un événement logique d'entrée apte à éprouver si ledit état instantané vérifie une condition logique d'entrée ;
- un moyen de test d'un événement logique de sortie apte à éprouver si ledit état instantané vérifie une condition logique de sortie ; et
- un moyen de génération et d'émission en sortie d'une valeur de force de freinage en tant que force de freinage cible ; conforme à la revendication 12.

L'invention a également pour objet un système de freinage destiné à équiper un véhicule comportant une pluralité de capteurs, un contrôleur de freinage, et des unités d'actionnement d'étriers de frein, **caractérisé en ce que** le contrôleur de freinage est un contrôleur de freinage programmable tel que le contrôleur décrit ci-dessus.

Dans le mode de réalisation préféré, le système de freinage ci-dessus comporte au moins des étriers de frein électromécaniques destinées à équiper des roues arrière dudit véhicule.

L'invention a également pour but un véhicule comportant un système de freinage **caractérisé en ce que** ledit système de freinage est tel que celui décrit ci-dessus.

Avantageusement le procédé d'assistance selon l'invention est mise en oeuvre par une programmation adaptée du contrôleur de freinage dont dispose le système de freinage. De manière encore plus avantageuse, l'invention est mise en oeuvre dans un véhicule équipé d'un système de freinage hybride ou tout électrique, c'est-à-dire comportant au moins des étriers électromécaniques à l'arrière, pour appliquer une force de freinage cible sur les roues arrière de manière transparente pour le conducteur et sans bruit pour ne pas nuire au confort de ce dernier.

L'invention sera mieux comprise, et d'autres buts, détails, caractéristiques et avantages de celle-ci apparaîtront plus clairement au cours de la description suivante d'un mode de réalisation particulier de l'invention, donné uniquement à titre illustratif et non limitatif, en référence aux dessins annexés. Sur ces dessins :
- la figure 1 représente schématiquement un véhicule équipé d'un système de freinage hybride ;
- la figure 2 est un algorithme représentant les différentes étapes du procédé d'assistance à la conduite selon l'invention, mis en oeuvre sous forme logicielle dans le véhicule de la figure 1 ; et,
- la figure 3 montre des graphes donnant respectivement l'évolution temporelle de la force de freinage appliquée, de la vitesse du véhicule et de la sortie du capteur d'accélérateur.

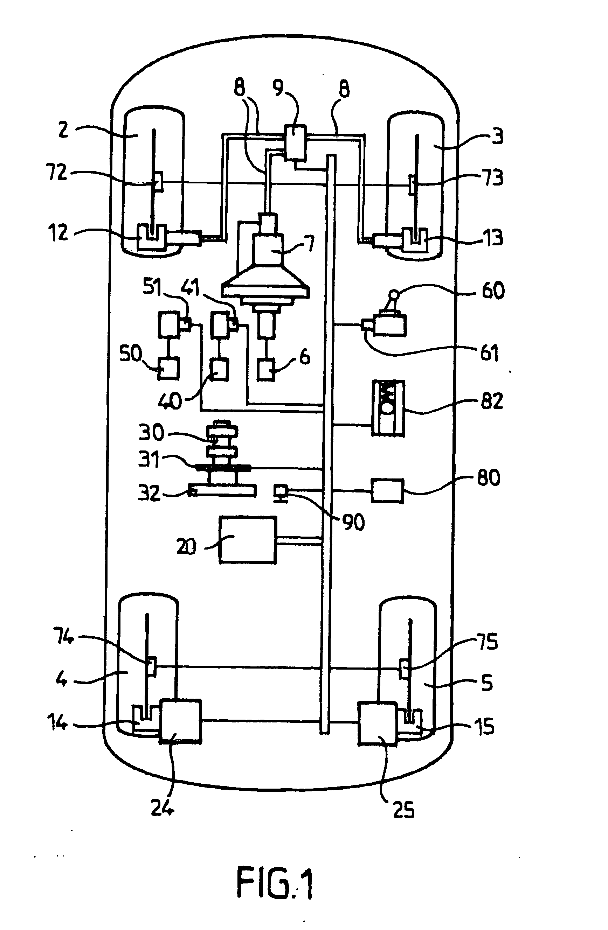

Bien que le procédé d'assistance selon l'invention puisse être mis en oeuvre quel que soit le type du système de freinage équipant le véhicule, dans le mode de réalisation actuellement préféré, le véhicule est équipé d'un système de freinage hybride tel qu'il va maintenant être décrit en détail en rapport avec la figure 1.

Un véhicule 1 comporte deux roues avant 2 et 3 et deux roues arrière 4 et 5. Le système de freinage hybride comporte une pédale de frein 6 reliée à un maître cylindre 7. Lorsque la pédale de frein 5 est enfoncée, le maître cylindre 7 génère une surpression hydraulique qui est propagée via l'unité hydraulique 9 et les canalisations 8 vers les étriers de frein hydrauliques 12 et 13 équipant respectivement les roues avant 2 et 3.

Les roues arrière 4 et 5 sont respectivement équipées d'étriers électromécaniques 14 et 15. Lorsque le conducteur appuie sur la pédale de frein 6, l'unité hydraulique 9 émet également un signal électrique proportionnel à la surpression générée par le maître cylindre 7, indiquant la force freinage F_{C} demandée par le conducteur. Ce signal électrique est reçu par un contrôleur de freinage 20. Le contrôleur de freinage 20 comporte au moins un calculateur et une mémoire aptes, entre autre, à stocker des programmes comportant une série d'instructions exécutables par le calculateur du contrôleur 20. Le contrôleur 20 comporte une interface d'entrée/sortie permettant l'acquisition des signaux entrant provenant en particulier des capteurs et le stockage des valeurs correspondantes dans des espaces mémoire et permettant l'émission de signaux en sortie en fonction de valeurs lues dans l'espace mémoire. En réponse à ce signal, le contrôleur 20 calcule des forces de freinage cibles pour la zone droite et la zone gauche qui doivent être respectivement appliquées par les étriers électromécaniques 14 et 15 aux roues arrières 4 et 5 correspondantes. Puis le contrôleur 20 émet des signaux de commande correspondant aux forces de freinage cibles droite et gauche en direction de calculateurs déportés 24, 25 qui régulent respectivement l'actionnement d'un étrier électromécanique. Ils ajustent la valeur en amplitude et en phase de l'intensité du courant alimentant le moteur équipant l'étrier de frein électromécanique, intensité du courant provenant d'une batterie et d'un alternateur non représentés.

Par ailleurs, le véhicule 1 est équipé d'une pluralité de capteurs permettant de mesurer la valeur instantanée de différentes variables.

La colonne de direction 30 est, par exemple, équipée d'un capteur 31 permettant de mesurer l'angle de braquage que le conducteur donne au volant 32.

La pédale d'accélération 40 comporte un capteur 41 permettant de mesurer le degré d'enfoncement de la pédale d'accélération. Le capteur 41 peut être un capteur continu. Le capteur 41 est de préférence discret et possède par exemple deux positions. Il émet un signal binaire Flag2 prenant la valeur nulle lorsque le conducteur n'appuie pas sur la pédale d'accélération et la valeur unité lorsque le conducteur appuie sur la pédale d'accélération de manière à l'enfoncer.

La pédale d'embrayage 50 comporte un capteur 51. Le capteur 51 peut être un capteur continu. Mais, de préférence en particulier pour limiter les coûts, le capteur 51 est un capteur discret par exemple à trois positions : une première position correspond à l'émission d'un signal Flag1 de valeur unité lorsque le conducteur n'appuie pas sur la pédale d'embrayage 50, dans le cas où le moteur est couplé aux roues ; une deuxième position correspond à l'émission d'un signal Flag1 de valeur nulle lorsque le conducteur appuie sur la pédale d'embrayage 50 de manière à être au point de patinage ; enfin, le capteur 51 peut être dans une troisième position, le signal Flag1 alors émis peut par exemple avoir une valeur unité marquée d'un signe négatif. Cette dernière position correspond au cas où la pédale d'embrayage est enfoncée au-delà du point de patinage, le moteur est alors découplé des roues motrices.

Le véhicule 1, s'il comporte une boîte de vitesses manuelle 60, peut être équipé d'un capteur 61 permettant de connaître la position du levier de vitesses. De manière avantageuse, le capteur 61 est un capteur discret optique possédant plusieurs positions : la première position correspond à la marche arrière, la valeur de sortie est par exemple -1 ; lorsque le levier de vitesses est dans la position neutre ou point mort, le capteur 61 émet un signal dont la valeur est 0 ; enfin, lorsqu'une marche avant est passée, le capteur 61 émet un signal de valeur +1.

Le véhicule 1 comporte, en outre, une pluralité de capteurs permettant de déterminer l'état cinématique du véhicule.

Chacune des roues 2-5 est équipée d'un capteur de vitesse de roue 72-75. Un capteur de vitesse de roue permet de mesurer la vitesse instantanée de rotation de la roue qu'il équipe. Cette information permet au contrôleur 20 de calculer une vitesse instantanée V du véhicule.

Pour mesurer l'accélération, le véhicule 1 comporte un capteur d'accélération latérale 80 et un capteur d'accélération longitudinale 82.

Les différents capteurs qui viennent d'être décrits sont connectés au contrôleur 20, via un réseau supportant par exemple le protocole CAN-Bus.

Le véhicule 1 comporte un interrupteur 90 disposé au siège du conducteur, par exemple sur le tableau de bord. En pressant l'interrupteur 90 le conducteur déclenche l'exécution du programme permettant que la fonction d'assistance de suivi de file soit active ou ne le soit pas.

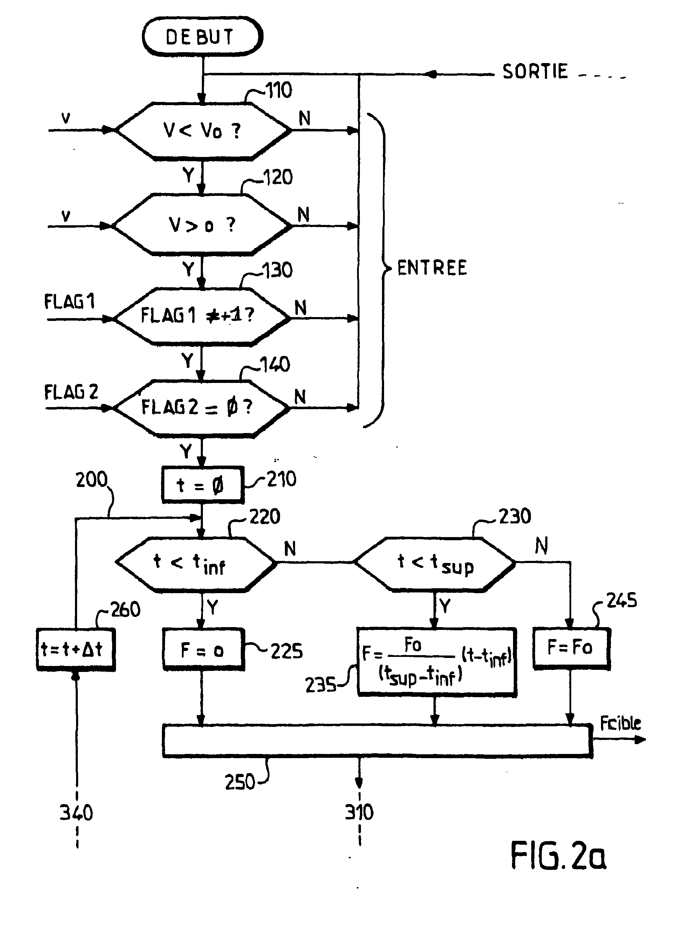

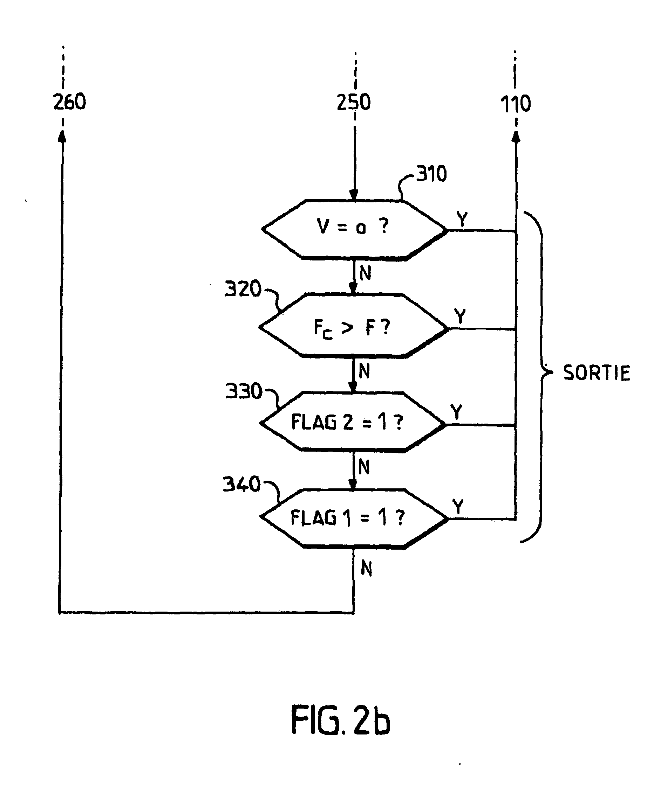

Sur la figure 2, un algorithme est représenté indiquant la succession des étapes du procédé d'assistance à la conduite selon un mode de réalisation de la présente invention utilisable dans une situation de suivi de file. Dans le mode de réalisation préféré, cet algorithme est mis en oeuvre par un programme d'assistance stocké dans l'espace mémoire du contrôleur de freinage 20 et exécuté en temps réel.

En basculant l'interrupteur 90, le conducteur indique qu'il souhaite être aidé pour suivre une file. Le programme d'assistance est alors exécuté de manière répétitive par le contrôleur 20 de manière à fournir une fonction d'assistance au conducteur. Schématiquement, le programme d'assistance teste l'existence d'un événement logique d'entrée en éprouvant si l'état instantané du véhicule vérifie une condition logique d'entrée. L'événement logique d'entrée est l'intersection d'événements d'entrée respectivement définis par la vérification d'une condition d'entrée élémentaire. Lorsque l'événement logique d'entrée est détecté, le programme d'assistance entre dans une boucle principale de gestion du freinage, boucle indexée temporellement. Le véhicule est alors légèrement freiné tant que l'état instantané ne correspond pas à un état logique de sortie, i.e. tant qu'un événement logique de sortie ne survient pas. L'événement logique de sortie est la réunion d'événements de sortie respectivement définis par la vérification d'une condition de sortie élémentaire. Il suffit qu'une seule de ces conditions élémentaires de sortie soit vérifiée pour que le programme d'assistance cesse de freiner le véhicule. On quitte alors l'exécution de la boucle principale pour reprendre l'exécution du programme à son début.

De manière plus détaillée, l'état instantané du véhicule est comparé à un état d'entrée indiquant que le véhicule doit être freiné. Cet état d'entrée est, dans le mode de réalisation actuellement envisagé, défini par la réunion de quatre conditions d'entrée élémentaire en plus du fait que l'interrupteur 90 a été enclenché par le conducteur

La première condition d'entrée 110 est une condition sur la vitesse. Il faut que la vitesse V du véhicule soit inférieure à une vitesse seuil V₀. La valeur de la vitesse seuil V₀ est faible, par exemple 20 km/h. Cela signifie que si la vitesse du véhicule est telle que la vitesse est inférieure à 20 km/h, la fonction d'assistance est susceptible d'actionner le freinage. Pour une vitesse supérieure à la vitesse seuil V₀, on estime que le véhicule n'est pas dans une situation de suivi de file et ne doit donc pas être freiné par la présente fonction.

La deuxième condition d'entrée 120 est également une condition sur la vitesse. Pour entrer dans la boucle principale de freinage, il faut que le véhicule ne soit pas à l'arrêt. On demande donc que la vitesse V soit supérieure à zéro. En effet, il n'est pas nécessaire de freiner le véhicule s'il se trouve déjà au repos.

La troisième condition d'entrée 130 est une condition sur la valeur du signal d'embrayage Flag1. Le capteur d'embrayage 51 a été précédemment décrit comme un capteur apte à émettre un signal ayant des valeurs discrètes. Pour entrer dans la boucle principale de freinage, il est requis que la valeur du signal d'embrayage corresponde au point de patinage ou au débrayage complet. En effet, si le conducteur débraie, cela indique que le véhicule n'est plus entraîné par le moteur. Si aucun couple n'est appliqué, la gestion des freins peut être prise en main par la fonction d'assistance. En conséquence, le signal Flagl provenant du capteur d'embrayage ne doit pas correspondre à la valeur +1 correspondant à une position embrayée de la pédale.

Enfin, la dernière condition d'entrée 140 est constituée par une condition sur la pédale d'accélérateur 40. Le capteur 41 placé sur la pédale d'accélérateur 40 est un interrupteur émettant un signal discret. La quatrième condition d'entrée correspond donc à la vérification que le signal d'accélérateur Flag2 est nul, c'est-à-dire que le conducteur n'appuie pas sur la pédale d'accélérateur. Le fait que le conducteur n'accélère pas constitue une information permettant de dire que le conducteur souhaite voir le véhicule être freiné.

Une fois que ces conditions d'entrée sont vérifiées simultanément, c'est-à-dire que l'état instantané du véhicule correspond à l'état d'entrée défini par ces conditions, le programme entre dans une boucle principale 200 de gestion du freinage.

La boucle 200 est indexée par la valeur d'une variable temporelle t servant de chronomètre. La variable t mesure la durée qui s'écoule depuis l'événement logique d'entrée, et est incrémentée périodiquement tant qu'un événement de sortie ne survient pas. A l'étape 210, la variable temporelle t est initialisée.

La boucle 200 débute par la comparaison à l'étape 220 de la valeur de la variable t avec une durée inférieure seuil t_{inf} prédéfinie, valant par exemple 1,5 seconde. Si la valeur de t est inférieure à 1,5 seconde, la force de freinage F générée par le programme d'assistance (étape 225) est nulle. La force de freinage générée est transmise à l'étape 250 en tant que force de freinage cible F_{cible} vers les unités d'actionnement ou de régulation 24 et 25 des freins électromécaniques qui équipent les roues arrière. Plus précisément, la force de freinage cible F_{cibie} est émise en direction d'un algorithme d'arbitrage, par ailleurs connu. Cet algorithme sélectionne parmi l'ensemble des requêtes de force de freinage cible qui lui sont envoyées en provenance de fonctions d'assistance mais également par exemple du système ABS, celle de ces requêtes qui a la priorité la plus haute. Cet algorithme d'arbitrage transmet ensuite la force de freinage cible sélectionnée aux unités de régulation déportées.

Si, à l'étape 220, la valeur de la variable t est supérieure à 1,5 seconde, le programme passe à l'étape 230. L'étape 230 consiste à comparer la valeur de la variable temporelle t à une durée supérieure seuil tₛᵤₚ prédéfinie, par exemple de 2,5 seconde. Si la valeur de t est inférieure à 2,5 secondes, alors la force de freinage générée est une fonction croissante de t, c'est à dire du temps. Par exemple, à l'étape 235, la force de freinage F est une fonction linéaire croissante du temps. La valeur correspondante de la force de freinage cible est ensuite émise en direction des unités de régulation des freins électromécaniques (étape 250).

Enfin, si à l'étape 230 la valeur de la variable t est supérieure à 2,5 secondes, la valeur de la force de freinage F générée est égale à une valeur de saturation de la force de freinage F₀. Par exemple, la force de freinage cible F₀ correspond à une décélération du véhicule de 1,5 ms⁻². Il est à noter que la décélération maximale du véhicule obtenue en freinant les deux roues arrière uniquement est de l'ordre de 3 ms⁻². A l'étape 250, la valeur correspondante de la force de freinage cible est émise en direction des unités de régulation des freins électromécaniques.

L'exécution de la boucle temporelle 200 se poursuit par la vérification d'une pluralité de conditions élémentaires de sortie qui, lorsqu'elles sont vérifiées, définissent respectivement des événements élémentaires de sortie. La réunion de ces événements élémentaires définit un événement logique de sortie. Lorsque survient cet événement logique de sortie, le programme quitte immédiatement la boucle principale 200 et reprend à l'étape 110 la détermination de l'état instantané pour entrer dans la boucle principale de freinage, l'interrupteur 90 étant toujours sur la position dans laquelle le conducteur souhaite être assisté.

La première condition élémentaire de sortie 310 est une condition sur la vitesse V. La vitesse instantanée V du véhicule est comparée à la valeur nulle. En effet, si le véhicule est finalement à l'arrêt, il n'est plus nécessaire de poursuivre l'exécution de la fonction d'assistance. Si cette condition sur la vitesse n'est pas vérifiée, le programme passe à la vérification d'une deuxième condition de sortie.

La deuxième condition élémentaire de sortie 320 est une condition sur la force de freinage F_{C} demandée par le conducteur par actionnement de la pédale de frein 6. Si la force de freinage demandée par le conducteur F_{C} est supérieure à la valeur actuelle de la force de freinage F générée par la fonction d'assistance, il est nécessaire de rendre la main au conducteur car il s'agit probablement d'un freinage d'urgence. Le programme d'assistance doit donc immédiatement quitter la boucle principale 200 de gestion du freinage.

Si la force de serrage F_{C} demandée par le conducteur reste inférieure à la force F générée par la présente fonction d'assistance, le programme passe à la vérification d'une troisième condition de sortie 330. Cette troisième condition de sortie 330 porte sur l'état du capteur d'accélérateur 41. Si le signal Flag2 provenant de ce capteur possède une valeur égale à 1, cela signifie que le conducteur enfonce la pédale d'accélérateur et souhaite redonner de la vitesse au véhicule. Cela signifie que le conducteur ne souhaite plus que le véhicule soit ralenti. Il est donc nécessaire de quitter la boucle principale 200 de gestion du freinage.

En revanche, si le conducteur n'enfonce pas la pédale d'accélération, la boucle principale 200 se poursuit par la vérification d'une quatrième condition de sortie 340 qui porte sur la valeur du signal provenant du capteur d'embrayage 51. Si la valeur du signal Flag 1 émis par le capteur d'embrayage 51 est égale à +1, cela signifie que le conducteur couple le moteur aux roues pour entraîner le véhicule. Il faut alors quitter la boucle principale 200 de la fonction d'assistance.

Si aucune de ces conditions élémentaires de sortie n'est vérifiée, la boucle principale 200 est refermée sur l'étape 220, après que la variable temporelle t a été incrémentée, en temps réel, d'une valeur prédéterminée Δt, par exemple de 10 millisecondes.

Il est à noter que l'étape 220 permet de laisser s'écouler un court laps de temps avant qu'une requête de freinage soit émise en direction des étriers électromécaniques arrière. En effet, il se peut que les conditions d'entrée soient vérifiées a priori mais que le conducteur ne souhaite pas, en fait, voir le véhicule être freiné. Pendant ce laps de temps (1,5 seconde), les conditions de sortie sont régulièrement testées pour donner l'occasion de sortir de la boucle de gestion du freinage. Si l'état instantané est tel que le programme reste dans la boucle principale plus de 1,5 seconde alors le freinage est progressivement actionné jusqu'à ce que la valeur de la force de freinage cible atteigne la valeur de saturation F₀.

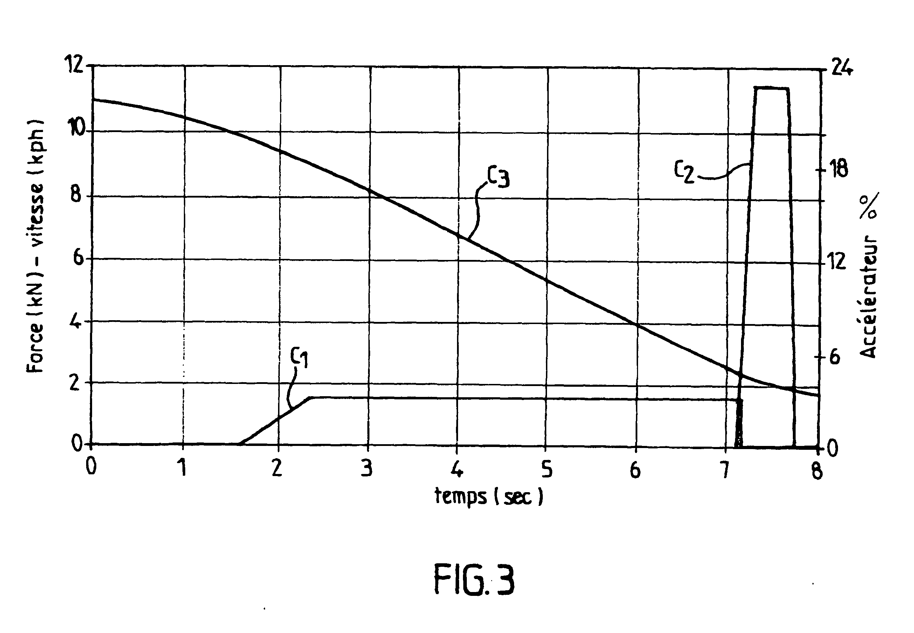

La demanderesse a implémenté le programme décrit ci-dessus dans le contrôleur de freinage 20 d'un véhicule 1 comportant un système de freinage hybride. Différents tests ont été réalisés. La figure 3 montre les variations temporelles de certaines variables au cours d'un de ces tests.

A un instant antérieur, le conducteur a basculé l'interrupteur 90 pour demander la mise en oeuvre de la fonction d'assistance de suivi de file. A l'instant t = 0, toutes les conditions d'entrée sont simultanément vérifiées.

Dans la première seconde et demie, une force de freinage de valeur nulle est requise. Ensuite, comme l'état instantané du véhicule continu à ne pas vérifier l'une des conditions de sortie, la force de freinage est progressivement augmentée pour que la décélération du véhicule corresponde à une valeur de 1,5 ms⁻² (courbe Cl). La valeur de la force de freinage est maintenue constante à une valeur maximale, jusqu'à ce qu'un événement de sortie entraîne la sortie de la boucle principale de gestion du freinage. Ici, le conducteur appuie sur la pédale d'accélération. La courbe C2 représente le degré d'enfoncement de la pédale d'accélérateur 40. Manifestement, dès que le conducteur appuie sur la pédale d'accélération 40, la condition de sortie 330 est vérifiée. Le programme cesse alors d'émettre une requête de force de freinage cible. Celle-ci redescend à la valeur nulle.

La courbe C3 représente la vitesse instantanée du véhicule au cours du test. La vitesse V diminue légèrement puis de manière plus importante et à un taux constant lorsque la force de freinage requise par la fonction d'assistance est égale à F₀. Dès que le conducteur donne un coup d'accélérateur, la vitesse cesse de décroître aussi rapidement.

Bien que l'invention ait été décrite en liaison avec un mode de réalisation particulier, il est bien évident qu'elle n'y est nullement limitée à celui-ci et qu'elle comprend tous les équivalents techniques des moyens décrits ainsi que leurs combinaisons si celles-ci entrent dans le cadre de l'invention défini par les revendications suivantes.

## Revendications

1. Procédé d'assistance au freinage d'un véhicule, ledit véhicule (1) étant équipé d'un système de freinage comportant des étriers de frein aptes à être actionnés en fonction d'une force de freinage cible, ledit procédé comportant les étapes consistant à :
- déterminer un état instantané dudit véhicule défini par au moins une variable d'état dont la valeur est obtenue à partir de mesures effectuées au moyen d'au moins un capteur dont est équipé ledit véhicule ;
- tester un événement logique d'entrée en éprouvant si ledit état instantané vérifie une condition logique d'entrée (110-140) ; et,
- lorsque la condition logique d'entrée est vérifiée, tester un événement logique de sortie en éprouvant si ledit état instantané vérifie une condition logique de sortie (310-340) ; et,
- lorsque la condition logique d'entrée est vérifiée, générer et émettre (225, 235, 245) une valeur de force de freinage (F) en tant que force de freinage cible (F_{cible}) pour actionner lesdits étriers de frein, tant que ladite condition logique de sortie n'est pas vérifiée,
ledit événement logique d'entrée étant défini par l'intersection d'une pluralité d'évènements d'entrée respectivement définis par la vérification d'une condition d'entrée élémentaire, ledit événement logique de sortie étant défini par la réunion d'une pluralité d'évènements de sortie respectivement définis par la vérification d'une condition de sortie élémentaire, **caractérisé en ce qu'**une condition d'entrée élémentaire est une condition de position de pédale d'embrayage (130), condition d'entrée qui est vérifiée lorsque la valeur (Flag1) émise par un capteur (51) apte à détecter la position d'une pédale d'embrayage (50) correspond à une position enfoncée au moins jusqu'au point de patinage de ladite pédale d'embrayage, et **en ce qu'**une condition de sortie élémentaire est une condition de position de pédale d'embrayage (340), condition qui est vérifiée lorsque la valeur (Flag1) émise par un capteur (51) apte à détecter la position d'une pédale d'embrayage (50) correspond à une position complètement relâchée de ladite pédale d'embrayage.

2. Procédé selon la revendication 1, **caractérisé en ce qu'**une condition d'entrée élémentaire est une condition de vitesse maximale du véhicule (110), condition d'entrée qui est vérifiée lorsque la valeur instantanée de la vitesse du véhicule (V) est inférieure à une valeur seuil (V₀).

3. Procédé selon la revendication 1 ou 2, **caractérisé en ce qu'**une condition d'entrée élémentaire est une condition de vitesse minimale du véhicule (120), condition d'entrée qui est vérifiée lorsque la valeur instantanée de la vitesse du véhicule (V) est supérieure à une vitesse nulle.

4. Procédé selon l'une des revendications 1 à 3, **caractérisé en ce que** ladite condition d'entrée élémentaire qui est une condition de position de pédale d'embrayage (130) est vérifiée lorsque la valeur (Flag1) émise par ledit capteur (51) apte à détecter la position de ladite pédale d'embrayage (50) correspond à une position complètement enfoncée de ladite pédale d'embrayage.

5. Procédé selon l'une des revendication 1 à 4, **caractérisé en ce qu'**une condition d'entrée élémentaire est une condition de position de pédale d'accélérateur (140), condition d'entrée qui est vérifiée lorsque la valeur (Flag2) émise par un capteur (41) apte à détecter la position d'une pédale d'accélérateur (40), correspond à une position complètement relâchée de ladite pédale d'accélérateur.

6. Procédé selon l'une des revendications 1 à 5, **caractérisé en ce qu'**une condition de sortie élémentaire est une condition de vitesse du véhicule (310), condition de sortie qui est vérifiée lorsque la valeur instantanée de la vitesse (V) dudit véhicule est nulle.

7. Procédé selon l'une des revendications 1 à 6, **caractérisé en ce qu'**une condition de sortie élémentaire est une condition de force de freinage (320), condition de sortie qui est vérifiée lorsque la valeur de la force de freinage demandée par le conducteur (F_{C}) est supérieure à la valeur de la force de freinage (F) générée à l'étape de génération.

8. Procédé selon l'une des revendications 1 à 7, **caractérisé en ce qu'**une condition de sortie élémentaire est une condition de position de pédale d'accélérateur (330), condition de sortie qui est vérifiée lorsque la valeur (Flag2) émise par un capteur (41) apte à détecter la position d'une pédale d'accélérateur (40), correspond à une position enfoncée de ladite pédale d'accélérateur.

9. Procédé selon l'une des revendications 1 à 8, **caractérisée en ce qu'**il comporte une étape consistant à mesurer la durée depuis l'événement logique d'entrée, et **en ce que** ladite force de freinage générée a une valeur nulle tant que ladite durée est inférieure à une durée inférieure seuil (t_{inf}) prédéfinie.

10. Procédé selon l'une des revendications 1 à 9, **caractérisée en ce qu'**il comporte une étape consistant à mesurer la durée depuis l'événement logique d'entrée, et **en ce que** ladite force de freinage générée a une valeur qui est une fonction croissante de ladite durée.

11. Logiciel d'assistance à la conduite contenant des instructions propres à être lues et stockées sur un support, lesdites instructions étant exécutables par un ordinateur hôte, **caractérisé en ce que** ledit logiciel met en oeuvre un procédé selon l'une quelconque des revendications 1 à 10.

12. Contrôleur de freinage (20) programmable, comportant un espace mémoire apte à stocker des instructions d'un programme, un calculateur apte à exécuter lesdites instructions et une interface d'entrée/sortie connectable en entrée à au moins un capteur (51) apte à détecter la position d'une pédale d'embrayage dont est équipé ledit véhicule, et en sortie à au moins une unité d'actionnement d'étrier de frein dudit système de freinage, ledit contrôleur étant programmé pour comporter :
- un moyen de détermination d'un état instantané dudit véhicule, état défini par au moins une variable d'état obtenue à partir de mesures effectuées au moyen dudit au moins un capteur ;
- un moyen de test d'un événement logique d'entrée apte à éprouver si ledit état instantané vérifie une condition logique d'entrée (110-140) ;
- un moyen de test d'un événement logique de sortie apte à éprouver si ledit état instantané vérifie une condition logique de sortie (310-340) ; et,
- un moyen de génération et d'émission en sortie (225, 235, 245) d'une valeur de force de freinage (F) en tant que force de freinage cible (F_{cible}) ;
**caractérisé en ce que** ledit contrôleur est apte à mettre en oeuvre un procédé selon l'une des revendications 1 à 10 dans un système de freinage d'un véhicule, ledit contrôleur étant programmé pour comporter un moyen d'incrémentation temps réel d'une variable temporelle, ledit moyen de test d'un événement logique d'entrée étant apte éprouver si ledit état instantané vérifie une condition d'entrée élémentaire qui est une condition de position de pédale d'embrayage (130), condition d'entrée qui est vérifiée lorsque la valeur (Flag1) émise par un capteur (51) apte à détecter la position d'une pédale d'embrayage (50) correspond à une position enfoncée au moins jusqu'au point de patinage de ladite pédale d'embrayage, ledit moyen de test d'un événement logique de sortie étant apte éprouver si ledit état instantané vérifie une condition de sortie élémentaire qui est une condition de position de pédale d'embrayage (340), condition qui est vérifiée lorsque la valeur (Flag1) émise par un capteur (51) apte à détecter la position d'une pédale d'embrayage (50) correspond à une position complètement relâchée de ladite pédale d'embrayage.

13. Système de freinage destiné à équiper un véhicule comportant une pluralité de capteurs, un contrôleur de freinage, et des unités d'actionnement d'étriers de frein, **caractérisé en ce que** ledit contrôleur de freinage est un contrôleur de freinage programmable selon la revendication 12.

14. Système de freinage selon la revendication 13, **caractérisé en ce qu'**il comporte au moins des étriers de frein électromécaniques destinées à équiper des roues arrière dudit véhicule.

15. Véhicule comportant un système de freinage **caractérisé en ce que** ledit système de freinage est un système de freinage selon la revendication 13 ou la revendication 14.

## Claims

1. Method for assisting the braking of a vehicle, said vehicle (1) being equipped with a braking system comprising brake calipers able to be actuated as a function of a target braking force, said method comprising the steps of:
- determining an instantaneous state of said vehicle defined by at least one state variable, the value of which is obtained from measurements carried out by means of at least one sensor with which said vehicle is equipped;
- testing an input logic event by checking whether said instantaneous state verifies an input logic condition (110-140); and
- when the input logic condition is verified, testing an output logic event by checking whether said instantaneous state verifies an output logic condition (310-340); and
- when the input logic condition is verified, generating and transmitting (225, 235, 245) a braking force value (F) as the target braking force (F_{target}) for actuating said brake calipers until said output logic condition is verified,
said input logic event being defined by the intersection of a plurality of input events respectively defined by the verification of an elementary input condition, said output logic event being defined by the combination of a plurality of output events respectively defined by the verification of an elementary output condition, **characterised in that** one elementary input condition is a clutch pedal position condition (130), which input condition is verified when the value (Flag1) transmitted by a sensor (51) capable of detecting the position of a clutch pedal (50) corresponds to a depressed position, at least to the point of slip, of said clutch pedal, and **in that** one elementary output condition is a clutch pedal position condition (340), which condition is verified when the value (Flag1) transmitted by a sensor (51) capable of detecting the position of a clutch pedal (50) corresponds to a fully released position of said clutch pedal.

2. Method according to claim 1, **characterised in that** one elementary input condition is a vehicle maximum speed condition (110), which input condition is verified when the instantaneous value of the speed of the vehicle (V) is below a threshold value (V₀).

3. Method according to claim 1 or 2, **characterised in that** one elementary input condition is a vehicle minimum speed condition (120), which input condition is verified when the instantaneous value of the speed of the vehicle (V) is above a zero speed.

4. Method according to one of claims 1 to 3, **characterised in that** said elementary input condition which is a clutch pedal position condition (130) is verified when the value (Flag1) transmitted by said sensor (51) capable of detecting the position of said clutch pedal (50) corresponds to a fully depressed position of said clutch pedal.

5. Method according to one of claims 1 to 4, **characterised in that** one elementary input condition is an accelerator pedal position condition (140), which input condition is verified when the value (Flag2) transmitted by a sensor (41) capable of detecting the position of an accelerator pedal (40) corresponds to a fully released position of said accelerator pedal.

6. Method according to one of claims 1 to 5, **characterised in that** one elementary output condition is a vehicle speed condition (310), which output condition is verified when the instantaneous value of the speed (V) of said vehicle is zero.

7. Method according to one of claims 1 to 6, **characterised in that** one elementary output condition is a braking force condition (320), which output condition is verified when the value of the braking force demanded by the driver (F_{C}) is greater than the value of the braking force (F) generated in the generation step.

8. Method according to one of claims 1 to 7, **characterised in that** one elementary output condition is an accelerator pedal position condition (330), which output condition is verified when the value (Flag2) transmitted by a sensor (41) capable of detecting the position of an accelerator pedal (40) corresponds to a depressed position of said accelerator pedal.

9. Method according to one of claims 1 to 8, **characterised in that** it comprises a step of measuring the duration since the input logic event, and **in that** said generated braking force has a zero value for as long as said duration is below a predefined lower threshold duration (t_{low}).

10. Method according to one of claims 1 to 9, **characterised in that** it comprises a step of measuring the duration since the input logic event, and **in that** said generated braking force has a value that is an increasing function of said duration.

11. Driving assistance software containing instructions that are able to be read and stored on a medium, said instructions being able to be executed by a host computer, **characterised in that** said software carries out a method according to any one of claims 1 to 10.

12. Programmable braking controller (20), comprising a memory space capable of storing instructions of a program, a computer capable of executing said instructions, and an input/output interface which is able to be connected at its input to at least one sensor (51) capable of detecting the position of a clutch pedal with which said vehicle is equipped and at its output to at least one brake caliper actuation unit of said braking system, said controller being programmed so as to comprise:
- a means of determining an instantaneous state of said vehicle, this state being defined by at least one state variable obtained from measurements carried out by means of said at least one sensor;
- a means of testing an input logic event capable of checking whether said instantaneous state verifies an input logic condition (110-140);
- a means of testing an output logic event capable of checking whether said instantaneous state verifies an output logic condition (310-340); and
- a means of generating and transmitting as output (225, 235, 245) a braking force value (F) as the target braking force (F_{target});
**characterised in that** said controller is able to carry out a method according to one of claims 1 to 10 in a braking system of a vehicle, said controller being programmed so as to comprise a means of incrementing in real time a temporal variable, said means of testing an input logic event being capable of checking whether said instantaneous state verifies an elementary input condition which is a clutch pedal position condition (130), which input condition is verified when the value (Flag1) transmitted by a sensor (51) capable of detecting the position of a clutch pedal (50) corresponds to a depressed position, at least to the point of slip, of said clutch pedal, said means of testing an output logic event being capable of checking whether said instantaneous state verifies an elementary output condition which is a clutch pedal position condition (340), which condition is verified when the value (Flag1) transmitted by a sensor (51) capable of detecting the position of a clutch pedal (50) corresponds to a fully released position of said clutch pedal.

13. Braking system intended to be provided on a vehicle, comprising a plurality of sensors, a braking controller and brake caliper actuation units, **characterised in that** said braking controller is a programmable braking controller according to claim 12.

14. Braking system according to claim 13, **characterised in that** it comprises at least electromechanical brake calipers intended to equip the rear wheels of said vehicle.

15. Vehicle comprising a braking system, **characterised in that** said braking system is a braking system according to claim 13 or claim 14.

## Patentansprüche

1. Verfahren zur Bremskraftverstärkung eines Fahrzeugs, wobei das Fahrzeug (1) mit einem Bremssystem ausgestattet ist, umfassend Bremszangen, die dazu angepasst sind, je nach der Zielbremskraft betätigt zu werden, wobei das Verfahren die folgenden Schritte umfasst:
- Bestimmen eines augenblicklichen Zustands des Fahrzeugs, definiert durch zumindest einen variablen Zustand, dessen Wert ausgehend von Messungen erhalten wird, die mit Hilfe von zumindest einem Sensor durchgeführt werden, mit dem das Fahrzeug ausgestattet ist;
- Testen eines logischen Eingangsereignisses durch Überprüfen, ob der augenblickliche Zustand einer logischen Eingangsbedingung (110-140) entspricht; und
- wenn die logische Eingangsbedingung vorliegt, Testen eines logischen Ausgangsereignisses durch Überprüfen, ob der augenblickliche Zustand einer logischen Ausgangsbedingung (310-340) entspricht; und
- wenn die logische Eingangsbedingung vorliegt, Erzeugen und Ausgeben (225, 235,245) eines Bremskraftwertes (F) als Zielbremskraftwert (F_{cible}), um die Bremszangen zu betätigen, solange die logische Bedingung nicht vorliegt,
wobei das logische Eingangsereignis durch die Schnittmenge einer Vielzahl von Eingangsereignissen definiert wird, die jeweils durch die Überprüfung einer grundlegenden Eingangsbedingung definiert werden, wobei das logische Ausgangsereignis durch die Zusammenführung eine Vielzahl von Ausgangsereignissen definiert wird, die jeweils durch die Überprüfung einer grundlegenden Ausgangsbedingung definiert werden, **dadurch gekennzeichnet, dass** eine grundlegende Eingangsbedingung eine Bedingung der Position des Kupplungspedals (130) ist, eine Eingangsbedingung, die überprüft wird, wenn der Wert (Flag1), ausgegeben von einem Sensor (51), der dazu geeignet ist, die Position eines Kupplungspedals (50) festzustellen, einer Position entspricht, die zumindest bis zum Durchdrehpunkt des Kupplungspedals gedrückt ist, und **dadurch**, dass eine grundlegende Ausgangsbedingung eine Bedingung der Position des Kupplungspedals (340) ist, wobei diese Bedingung überprüft wird, wen der Wert (Flag1), ausgegeben von einem Sensor (51), der dazu geeignet ist, die Position eines Kupplungspedals (50) festzustellen, einer vollständig losgelassenen Position des Kupplungspedals entspricht.

2. Verfahren nach Anspruch 1, **dadurch gekennzeichnet, dass** eine grundlegende Eingangsbedingung eine Bedingung der maximalen Geschwindigkeit des Fahrzeugs (110) ist, wobei diese Eingangsbedingung überprüft wird, wenn der augenblickliche Wert der Geschwindigkeit des Fahrzeugs (V) geringer als ein Schwellenwert (V₀) ist.

3. Verfahren nach Anspruch 1 oder 2, **dadurch gekennzeichnet, dass** eine grundlegende Eingangsbedingung eine Bedingung der minimalen Geschwindigkeit des Fahrzeugs (120) ist, wobei diese Eingangsbedingung überprüft wird, wenn der augenblickliche Wert der Geschwindigkeit des Fahrzeugs (V) größer als eine Geschwindigkeit null ist.

4. Verfahren nach einem der Ansprüche 1 bis 3, **dadurch gekennzeichnet, dass** die grundlegende Eingangsbedingung, die eine Bedingung der Position des Kupplungspedals (130) ist, überprüft wird, wenn der Wert (Flag1), ausgegeben von dem Sensor (51), der dazu geeignet ist, die Position des Kupplungspedals (50) festzustellen, einer vollständig gedrückten Position des Kupplungspedals entspricht.

5. Verfahren nach einem der Ansprüche 1 bis 4, **dadurch gekennzeichnet, dass** eine grundlegende Eingangsbedingung eine Bedingung der Position des Fahrpedals (140) ist, wobei die Eingangsbedingung überprüft wird, wenn der Wert (Flag2), ausgegeben von einem Sensor (41), der dazu geeignet ist, die Position eines Fahrpedals (40) festzustellen, einer vollständig losgelassenen Position des Fahrpedals entspricht.

6. Verfahren nach einem der Ansprüche 1 bis 5, **dadurch gekennzeichnet, dass** eine grundlegende Ausgangsbedingung eine Bedingung der Geschwindigkeit des Fahrzeugs (310) ist, wobei die Ausgangsbedingung überprüft wird, wenn der augenblickliche Wert der Geschwindigkeit (V) des Fahrzeugs null ist.

7. Verfahren nach einem der Ansprüche 1 bis 6, **dadurch gekennzeichnet, dass** eine grundlegende Ausgangsbedingung eine Bedingung der Bremskraft (320) ist, wobei die Ausgangsbedingung überprüft wird, wenn der Wert der Bremskraft, angefordert vom Fahrer (Fc), höher als der Wert der Bremskraft (F) ist, der im Generierungsschritt generiert wird.

8. Verfahren nach einem der Ansprüche 1 bis 7, **dadurch gekennzeichnet, dass** eine grundlegende Ausgangsbedingung eine Position des Fahrpedals (330) ist, wobei die Ausgangsbedingung überprüft wird, wenn der Wert (Flag2), ausgegeben von einem Sensor (41), der dazu geeignet ist, die Position eines Fahrpedals (40) festzustellen, einer gedrückten Position des Fahrpedals entspricht.

9. Verfahren nach einem der Ansprüche 1 bis 8, **dadurch gekennzeichnet, dass** es einen Schritt umfasst, der im Messen der Dauer seit dem logischen Eingangsereignis besteht, und **dadurch**, dass die erzeugte Bremskraft einen Wert null hat, solange die Dauer geringer als eine vorbestimmte untere Schwellendauer (t_{inf}) ist.

10. Verfahren nach einem der Ansprüche 1 bis 9, **dadurch gekennzeichnet, dass** es einen Schritt umfasst, der im Messen der Dauer seit dem logischen Eingangsereignis besteht, und **dadurch**, dass die erzeugte Bremskraft einen Wert hat, der eine ansteigende Funktion der Dauer ist.

11. Software zur Fahrunterstützung, umfassend Anweisungen, die geeignet sind, auf einem Support gelesen und gespeichert zu werden, wobei die Anweisungen von einem Hostcomputer ausgeführt werden können, **dadurch gekennzeichnet, dass** die Software ein Verfahren nach einem der Ansprüche 1 bis 10 durchführt.

12. Programmierbare Bremssteuerung (20), umfassend einen Speicherraum, der dazu geeignet ist, Anweisungen eines Programms zu speichern, einen Rechner, der dazu geeignet ist, die Anweisungen auszuführen, und eine Eingangs-/Ausangsschnittstelle, die am Eingang mit zumindest einem Sensor (51) verbunden werden kann, der dazu geeignet ist, die Position eines Kupplungspedals festzustellen, mit dem das Fahrzeug ausgestattet ist, und am Ausgang mit zumindest einer Einheit zur Betätigung der Bremszange des Bremssystems, wobei die Steuerung programmiert ist, um Folgendes zu umfassen.
- ein Mittel zur Bestimmung eines augenblicklichen Zustands des Fahrzeugs, wobei der Zustand durch zumindest einen variablen Zustand definiert ist, der ausgehend von Messungen erhalten wird, die mit Hilfe des zumindest einen Sensors durchgeführt werden;
- ein Mittel zum Testen eines logischen Eingangsereignisses, das dazu geeignet ist, zu überprüfen, ob der augenblickliche Zustand einer logischen Eingangsbedingung (110-140) entspricht;
- ein Mittel zum Testen eines logischen Ausgangsereignisses, das dazu geeignet ist, zu überprüfen, ob der augenblickliche Zustand einer logischen Ausgangsbedingung (310-340) entspricht; und
- ein Mittel zur Generierung und Ausgabe am Ausgang (225, 235, 245) eines Bremskraftwertes (F) als Zielbremskraft (F_{cible});
**dadurch gekennzeichnet, dass** die Steuerung dazu geeignet ist, ein Verfahren nach einem der Ansprüche 1 bis 10 in einem Bremssystem eines Fahrzeugs durchzuführen, wobei die Steuerung programmiert ist, um ein Mittel zur Erhöhung in Echtzeit einer zeitlichen Variablen zu umfassen, wobei das Mittel zum Testen eines logischen Eingangsereignisses dazu geeignet ist, zu überprüfen, ob der augenblickliche Zustand einer grundlegenden Eingangsbedingung entspricht, die eine Bedingung der Position des Kupplungspedals (130) ist, wobei die Eingangsbedingung überprüft wird, wenn der Wert (Flag1), ausgegeben von einer Sonde (51), die dazu geeignet ist, die Position eines Kupplungspedals (50) festzustellen, einer Position entspricht, die zumindest bis zum Durchdrehpunkt des Kupplungspedals gedrückt ist, wobei das Mittel zum Testen eines logischen Ausgangsereignisses dazu geeignet ist, zu überprüfen, ob der augenblickliche Zustand einer grundlegenden Ausgangsbedingung entspricht, die eine Bedingung des Kupplungspedals (340) ist, wobei die Bedingung überprüft wird, wenn der Wert (Flag1), ausgegeben von einem Sensor (51), der dazu geeignet ist, die Position eines Kupplungspedals (50) festzustellen, einer vollständig losgelassenen Position des Kupplungspedals entspricht.

13. Bremssystem, dazu vorgesehen, ein Fahrzeug auszustatten, umfassend eine Vielzahl von Sensoren, eine Bremssteuerung und Einheiten zur Betätigung von Bremszangen, **dadurch gekennzeichnet, dass** die Bremssteuerung eine programmierbare Bremssteuerung nach Anspruch 12 ist.

14. Bremssystem nach Anspruch 13, **dadurch gekennzeichnet, dass** es zumindest elektromechanische Bremszangen umfasst, die dazu vorgesehen sind, Hinterräder des Fahrzeugs auszustatten.

15. Fahrzeug, umfassend ein Bremssystem, **dadurch gekennzeichnet, dass** das Bremssystem ein Bremssystem nach Anspruch 13 oder Anspruch 14 ist.
